# EUROPEAN PATENT SPECIFICATION

(11) **EP 2 174 539 B1**
(45) Date of publication and mention of the grant of the patent: **20.07.2011**
(21) Application number: 09172775.0
(22) Date of filing: 12.10.2009
(51) Int. Cl.: A01G 9/02

(54) **Assembly for growing a plant, plurality of such assemblies and method for growing a plant**
Pflanzenzuchtanordnung, Mehrheit von solchen Anordnungen und Pflanzenzuchtverfahren
Assemblage pour cultiver une plante, ensemble de tels assemblages et méthode pour cultiver une plante

(30) Priority: 10.10.2008 NL 2002081
(43) Date of publication of application: 14.04.2010
(73) Proprietor: WPS Horti Systems B.V., 2678 AC De Lier (NL)
(72) Inventor: Van der Meijs, Richard Petrus, 3155 DE, MAASLAND (NL); Dijkshoorn, Lars, 3141 BB, MAASSLUIS (NL)
(74) Representative: Groeneveld, Yme Geert

(56) References cited:
- WO-A-2005/077150
- JP-A- 6 098 654
- JP-A- 7 031 293
- JP-A- 10 309 134
- JP-A- 2001 086 873
- JP-A- 2007 244 219
- US-A- 4 791 754
- US-A1- 2003 106 262

## Description

The present invention relates to an assembly for growing a plant, comprising on the one hand an inner pot for holding a substrate with a plant growing in the substrate, and on the other hand an outer pot; in which the inner pot can be accommodated in the outer pot; and in which, when the inner pot is accommodated in the outer pot, the wall of the outer pot protrudes above the wall of the inner pot in the vertical direction in order to support said plant.

Such an assembly according to the preamble of claim 1 is known from US-2003/0,106,262. This publication discloses an inner pot which is placed in an outer pot, with the wall of the outer pot protruding above the wall of the inner pot. The side wall and bottom of the inner pot are provided with ventilation holes and slots. Except for a ventilation hole provided in the centre of the bottom, the outer pot is closed at the bottom in order to form a water reservoir. The inner pot, with its top edge which is in the shape of a round, ring-shaped band, sealingly bears against the inner wall of the outer pot on all sides. Below the ring-shaped band which forms the top edge of the inner pot, the wall of the inner pot is not round, but ridged in order to provide ventilation ducts. Air which has entered via the central ventilation hole in the bottom of the outer pot can thus, via the ventilation ducts between the wall of the outer pot and the ridged part of the wall of the inner pot, flow to the ventilation holes and slots in the inner wall of the inner pot, enter the substrate via these ventilation holes and slots and subsequently flow through the substrate and leave the substrate at the top. In this case, the fact that the ring- and band-shaped top edge of the inner pot sealingly bears against the inner wall of the outer pot on all sides ensures that the ventilation flow is forced to flow through the substrate. If this sealing on all sides were not present, the ventilation flow would find the path of least resistance and no longer pass through the substrate.

Such an assembly according to the preamble of claim 1 is also known in practice. When growing phalaenopsis, a species of orchid, it is for example known to raise the plant at least from a certain stage onwards in an inner pot which is placed inside an outer pot. The inner pot is lower than the outer pot. The inner pot contains substrate which contains the plant, in this example a phalaenopsis plant. This inner pot is placed in an outer pot. This outer pot supports the plant, in particular the leaves of the plant. When growing such plants, it is often desired, at least during a phase of the growing process, to arrange the plants as close together as possible in order to achieve the highest degree of occupation of the surface area which is available for growing. The outer pot protruding above the inner pot in this case ensures that the leaves of a plant in the one inner pot cannot end up between the leaves of a plant in an adjacent inner pot. This could otherwise result in the plants situated next to one another becoming entangled with one another. It is not easy to disentangle plants which are situated next to one another and have become entangled with one another, and they can easily become damaged in the process. In addition, the outer pot protects the plant from damage during handling of the assembly. When the plant is a phalaenopsis, damage of a leaf will result in permanent damage. The leaf does not fall off, but the damaged parts become brown around the edges and this makes the plant difficult to sell. The outer pot furthermore ensures that the leaves of one plant do not overlap another neighbouring plant and thus take away water and light from this neighbouring plant. The use of an outer pot thus makes it possible to ensure even lighting and humidification of plants which are placed close together.

According to the invention and according to the prior art, the outer pot may be a pot in which the inner pot is accommodated in its entirety, that is to say the bottom of the inner pot will (usually) be on the bottom of the outer pot, will at least be higher than the bottom of the outer pot. According to the invention and also according to the prior art, it is, however, possible that the outer pot is designed as a collar which is placed on the wall of the inner pot, usually on the top edge of the wall of the inner pot, and is attached to the wall of the inner pot. The walls of the inner pot and outer pot can overlap in this case, but it is also possible for the wall of the outer pot and the wall of the inner pot not to overlap, viewed in the horizontal direction. With the known assemblies, the outer pot and inner pot are substantially round in shape, viewed in the horizontal plane.

As is known, when growing plants, the climate and the control thereof is generally very important. The term climate in this context is understood to mean the temperature, the moisture and the composition of the air in which the plants are grown. The plants may in this case be subjected to a forced air stream or to a natural air stream - under the effect of heat, air has a natural tendency to rise and thus create an upward stream.

It is an object of the present invention to provide an improved assembly according to the preamble of claim 1.

According to the invention, this object is achieved by providing an assembly for growing a plant, comprising on the one hand an inner pot for holding a substrate with a plant growing in the substrate and on the other hand an outer pot; in which the inner pot can be accommodated in the outer pot; in which, when the inner pot is accommodated in the outer pot, the wall of the outer pot protrudes above the wall of the inner pot in the vertical direction in order to support said plant; which assembly is characterized, according to the invention, by the fact that, viewed in the horizontal plane, the top edge of the wall of the outer pot has a hexagonal shape having six sides extending between adjacent corners, the opposite sides of the hexagonal top edge in each case running parallel to one another.

According to the invention, a substrate is provided in the inner pot which contains a plant. According to the invention the plant is of the type in which the leaves grow in substantially opposite directions - the leaves generally being folded out at an angle of 120° to 180° - as is the case with a plant of the phalaenopsis species, and in which the plant is oriented in the outer pot in such a manner that these leaves point to opposite corners of the top edge. Good support for the leaves is provided in this manner.

According to a further advantageous embodiment, the plant is of the phalaenopsis species.

The hexagonal top edge having parallel opposite sides makes it possible for a plurality of assemblies to be arranged in a honeycomb-like structure with the top edges of the outer pots positioned against one another. Intermediate spaces between adjacent portions of top edges of adjacent outer pots may in this case be substantially absent. The hexagonal top edge with parallel opposite sides furthermore ensures an optimum use of space which is entirely to the benefit of the plant to be grown in the assembly. With known assemblies, the outer pot of which has a round top edge, there are always empty spaces between adjacent outer pots when a large number of such assemblies are placed close together. These empty spaces result in an inefficient use of space, since this space cannot be used by the plants to be grown. With the assembly according to the invention, these empty spaces are as it were moved completely to the inside of the outer pot and thus form a useful space for the plant to be grown. This may result in an increase in the useful internal space of an inner pot at an equal maximum number of assemblies per m², but it can also result in more assemblies per m² when the interior space of the outer pot remains unchanged or, as is made possible by the invention, is even reduced if desired. Furthermore, combinations of these variants will be possible, such as increasing the maximum number of assemblies per m² while at the same time increasing the interior space of the outer pots.

Preventing empty spaces, and moving these empty spaces to the inside of the outer pots can as such also be realized by designing the outer pots to be square or rectangular. In that case, the assemblies can also all be placed in a matrix-like pattern with the top edges of the outer pots placed against one another. However, the use of space in the outer pot is then relatively limited with a view to the supporting function of the wall of the outer pot for the plant to be grown.

According to a further embodiment of the invention, it is advantageous if the bottom of the outer pot is at least partially open. The bottom of the outer pot can then allow a vertical gas stream to pass through. When a plurality of assemblies according to the invention arranged in a honeycomb-like structure is placed in a vertical gas stream, then this vertical gas stream will pass through the outer pots virtually completely. A vertical gas stream between adjacent outer pots is prevented by the top edges of adjacent outer pots being placed against one another. The plant to be grown is, at least to a large degree, inside the outer pot. This also applies to the leaves of the plant, which rest or at least can rest on the portion of the wall of the outer pot which is situated above the inner pot in a known manner. The contact between the vertical gas stream and the plants to be grown in the assemblies is thus optimal, since there is no gas stream which passes between adjacent outer pots as a kind of leakage flow.

In order to be able to offer good support to plants whose leaves or the branches on which the latter grow tend to want to branch out in the horizontal direction, it is advantageous according to the invention if the hexagonal shape has a first set of two opposite sides of mutually equal length, with the other sides in each case having the same length, and with the length of the sides of the first set of two opposite sides being unequal to the length of the other sides. Thus, a more or less elongate hexagonal shape of the top edge is achieved. The plant then has more space to branch out in the elongate direction, while the creation of space which is not used in an optimum manner in the interior of the outer pot is prevented. The applicant has found that many plants which tend to branch out can be grown successfully if there is sufficient horizontal space in one direction and that it is not strictly necessary to provide sufficient horizontal space in all directions. With some species of plants, such as the phalaenopsis species, it is moreover the case that these have a natural tendency to form the leaves at a mutual angle of 120° to 180°, or in other words in substantially opposite directions. In this case, it is particularly advantageous if the length of the sides of the first set of two opposite sides is greater than the length of the other sides. This means in effect that the two corners which are enclosed by in each case two of the other four equally long sides are furthest from each other. The leaves will then have the most optimum support in these corners which are furthest apart.

According to a further embodiment, the wall of the outer pot, at a distance from the top edge, has a cross-sectional shape which is equilaterally polygonal or round (viewed in the horizontal plane). This may, at the bottom of the outer pot, be at the bottom edge of the outer pot, but can also equally well be at a distance above the bottom side of the wall of the outer pot. The advantage thereof is that the outer pot fits into conventional round receiving holes with a diameter which is equal to that of the imaginary outer circle. A further advantage is the fact that conventional round inner pots can be lifted up by means of gripping elements which are adjusted to round pots. According to the invention, it is advantageous if said equilateral polygonal or round cross-sectional shape is situated at a vertical height of approximately 5 to 12 cm, such as approximately 8 cm, above the bottom side of the inner pot - when the latter is accommodated in the outer pot. Thus, the assembly is easier to handle when it is picked up there at this height by. A large part of the mass is then below the point of engagement. An equilateral polygonal shape means that an outer circle can be defined which intersects all corners of the polygonal shape and that an inner circle can also be defined which touches all sides of the polygonal shape in the centre. In particular, said cross section of the wall of the outer pot in this case has a hexagonal shape.

According to a further embodiment of the invention, the wall of the outer pot has six substantially flat wall segments, with the sides of the hexagonal top edge in each case form a top side of said segment plane. Such flat wall segments offer the advantage that they can easily be engaged by means of a suction cup. Thus, it is possible to use suction cup grippers for gripping and handling an assembly according to the invention or an outer pot of such an assembly.

As has been explained above, according to the prior art and also according to the invention, it is possible to design the outer pot as a kind of collar which is fitted to the wall of the inner pot, in particular to the top edge thereof. The bottom side of the outer pot is then essentially completely open and, when the inner pot is accommodated in the outer pot, the inner pot to a large extent or virtually completely projects below the bottom edge of the wall of the outer pot. However, such a collar is not very practical in use. According to the invention, it is therefore furthermore advantageous if the outer pot and the inner pot each comprise a bottom, and the bottom of the outer pot being situated below the bottom of the inner pot when the inner pot is accommodated in the outer pot. Combining the outer pot and inner pot to form an assembly is then simply carried out by placing the inner pot in the outer pot.

According to a further embodiment of the assembly according to the invention, the outer pot has a substantially open bottom, with the bottom of the outer pot being composed of supporting arms and a mount supported by said supporting arms, with the supporting arms extending from the mount to the bottom edge of the wall of the outer pot, and with there being in each case an open space between adjacent supporting arms. Thus, the bottom of the outer pot can be kept open to a very large degree. The open gaps between the supporting arms ensure that a vertical gas stream can pass through the assembly. In particular, the supporting arms extend up to the wall of the outer pot, in particular the bottom edge thereof, and the supporting arms are attached to the wall of the outer pot. The open spaces between the adjacent supporting arms therefore run up to the wall of the outer pot. This ensures optimum permeability of the bottom of the outer pot. When the mount is provided in the centre of the bottom of the outer pot and has an identification element, a reading device can easily read this. The assembly according to the invention only has to be positioned with respect to the reading device to a limited degree. The rotational position of the assembly according to the invention with respect to the reading device is immaterial, since the identification element is provided in the central area of the bottom. A mount in the central area of the bottom of the outer pot moreover has virtually no adverse effect on the vertical through-flow with a gas, since the inner pot will be situated above this centre, i.e. above the mount, as a result of which the gas stream is already deflected in order to pass along the inner pot, between the inner pot and the outer pot. On the one hand, the supporting arms may serve to support the mount for an identification element in the centre of the bottom and, on the other hand, they can serve to support the inner pot to prevent the inner pot from falling out of the outer pot when the assembly is lifted up.

According to a further aspect, the invention relates to a plurality of adjacent assemblies according to the invention, in which a central outer pot is in each case surrounded by six surrounding outer pots, and in which each side of the top edge of the central outer pot in each case bears against the side of the top edge of one of these six surrounding outer pots.

It is furthermore advantageous in this case if the plurality of assemblies according to the invention is placed on a gas-permeable bearing surface of a support frame, such as on a gas-permeable bottom of a tray.

According to yet a further aspect, the invention relates to a method for growing a plant by means of an assembly according to the invention, in which the plant is of the type in which the leaves grow in a substantially opposite direction, as is the case with a phalaenopsis plant, and in which the plant is oriented in the outer pot in such a manner that these leaves point to opposite corners of the top edge. According to an advantageous embodiment of this method, the opposite corners to which the leaves point are further apart than the other corners.

The present invention will be explained in more detail below by means of an example which is illustrated in the drawing, in which:
Figure 1 diagrammatically shows a perspective view of an outer pot for an assembly according to the invention;
Figure 2 diagrammatically shows a perspective view of a similar outer pot as that from

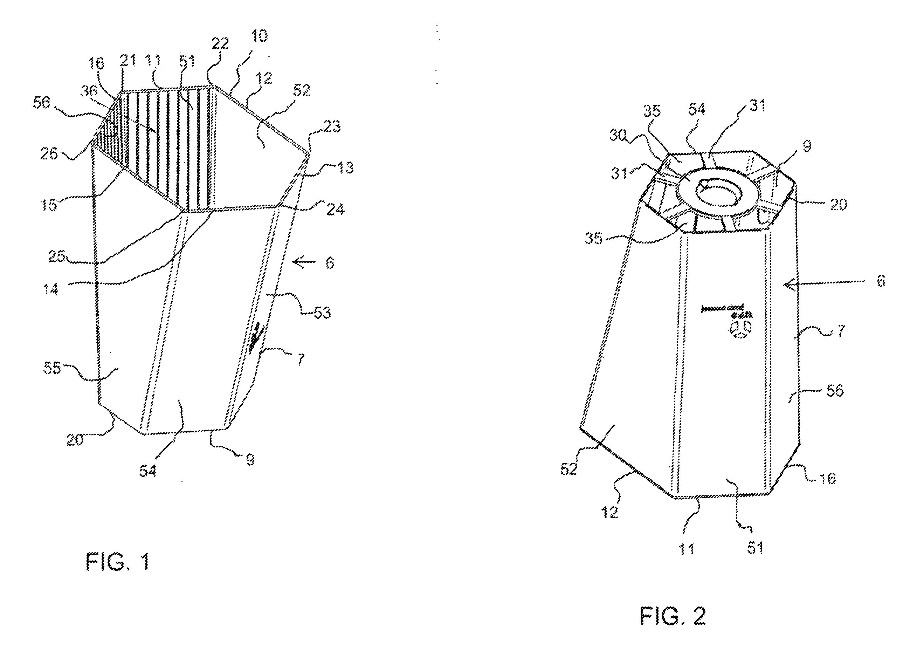

Figure 1, but now with an upside-down outer pot;

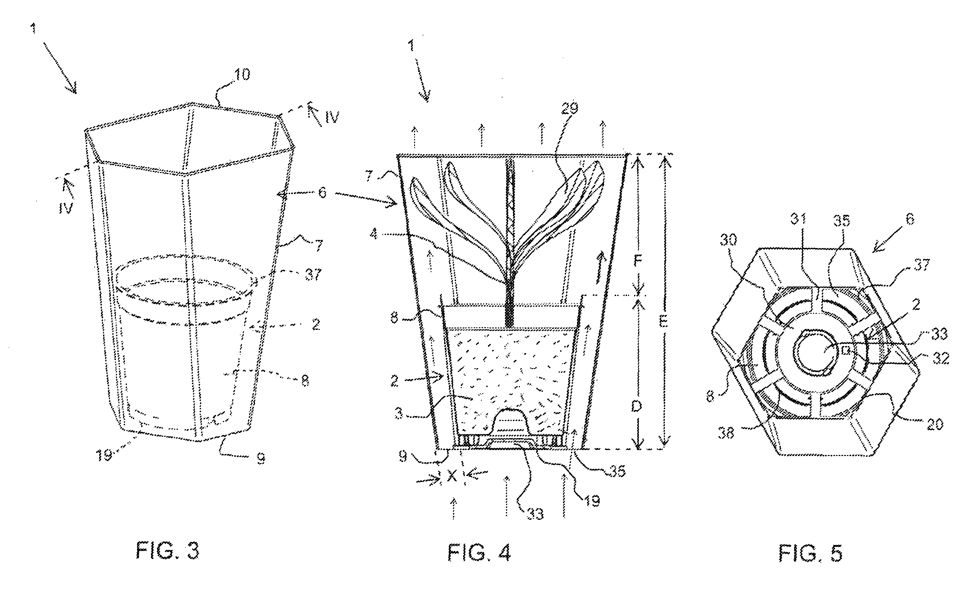

Figure 3 diagrammatically shows a perspective view of an assembly according to the invention;
Figure 4 shows a vertical cross-sectional view according to the arrows IV from Figure 3;
Figure 5 shows a bottom view of the assembly from Figures 3 and 4;

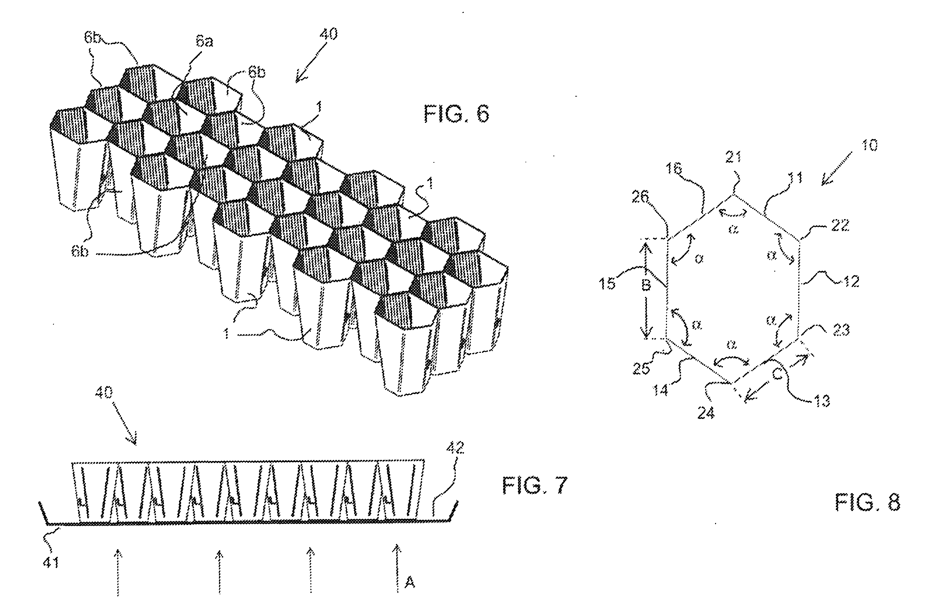

Figure 6 diagrammatically shows a perspective view of a plurality of assemblies according to the invention;
Figure 7 diagrammatically shows a side view of a support frame with a plurality of assemblies according to the invention; and
Figure 8 diagrammatically shows the top edge of an outer pot of an assembly according to the invention.

Figure 1 shows a perspective view of an outer pot 6 for an assembly according to the invention. This outer pot 6 has a wall 7 which extends upwards from the bottom edge 20, which is near the bottom 9, up to the top edge 10 of the wall 7 of the outer pot 6. The shape of this top edge 10 is hexagonal.

The hexagonal shape of the top edge 10 is illustrated in detail, in particular in Figure 8. The top edge 10 has six corners 21, 22, 23, 24, 25 and 26. Between each of these corners, in each case one side 11, 12, 13, 14, 15 and 16 of the hexagonal top edge 10 extends. The opposite sides 11 and 14 extend parallel to one another. The opposite sides 13 and 16 as well as the opposite sides 12 and 15 also run parallel to one another. The sides 12 and 15 each have a length B and all four sides 11, 13, 14 and 16 have the same length C. In this embodiment, adjacent sides in each case enclose an identical angle α. This angle α is 120°. As an indication of the dimensions - the distance between the sides 12 and 15 with the top edge shown by way of example in Figure 8 is 130 mm and the distance between the opposite corners 21 and 24 is 185 mm. The surface area enclosed by the top edge 10 can then be calculated as approximately 18,200 mm². As regards the surface area enclosed by the top edge, this can be compared to a conventional round top edge having a diameter of approximately 150 mm. The surface area enclosed by a top edge having a diameter of 150 mm is approximately 17,670 mm². A container tray which is known in practice and has a bearing surface of 6 m times 1.6 m, a maximum of 474 outer pots with a round top edge and a diameter of 150 mm can thus be placed, while 501 (i.e. approximately 5% more) outer pots having a top edge with the dimensions as described with reference to Figure 8 can be placed herein. This clearly demonstrates that with the hexagonal top edge according to the invention more plants per m² can be grown and also that there is more space for the plant in the outer pot, in particular for the leaves of the plant.

According to the invention, it is conceivable that this bottom 9 is completely open or completely closed. In particular in Figure 2, it can be seen that the bottom 9 of the outer pot 6 is substantially open. The bottom 9 is composed of a ring-shaped mount 30 which is attached to the bottom edge 20 of the wall 7 of the outer pot 6 by means of supporting arms 31. A passage in the form of an open intermediate space 35 is present in each case between adjacent supporting arms 31. These open spaces 35 give the bottom 9 of the outer pot 6 its open character.

In Figures 1 and 2, it can furthermore be seen that the wall 7 of the outer pot 6 is composed of six flat wall segments 51, 52, 53, 54, 55 and 56. Furthermore, Figure 1 shows that the wall segments 51 and 56 as well as the wall segments 53 and 54 (not visible in Figure 1) are provided with ribs 36 on the inside. The purpose of these ribs 36 is to prevent leaves from sticking to the wall segment. It will be clear that the wall segments 52 and 55 may also have such ribs on the inside.

Referring now to Figures 3, 4 and 5, a more specific explanation will be given of the assembly 1 according to the invention. The assembly 1 comprises an outer pot 6 as well as an inner pot 2. In the perspective view from Figure 3 of the outer pot 6, the (in fact invisible) inner pot 2 which is situated inside the outer pot 6 is indicated by dashed lines. The inner pot 2 has a side wall 8 and bottom 19. The side wall 8 is delimited on the top side by a circular top edge 37. With the inner pot and outer pot illustrated in the Figures 3, 4 and 5, the height D of the inner pot 2 is approximately 110 mm and the height E of the outer pot is approximately 230 mm. The difference in height F (=E-D) here is thus approximately 120 mm. According to the invention, this difference in height F is preferably at least 50 mm and more preferably at least 80 mm, for example 100 mm or more.

Referring to in particular the bottom view from Figure 5, it can be seen that when the inner pot 2 is placed in the outer pot 6, the abovementioned spaces 35 are still sufficiently free to allow a vertical gas stream to pass. The circular bottom edge of the wall 8 of the inner pot 2 is denoted here by reference numeral 38. Between the bottom edge 38 of the inner pot 2 and the bottom edge 20 of the outer pot 6, there is sufficient free space to allow the gas stream to pass through. It can furthermore be seen that the ring-shaped mount 30 falls entirely within the contour of the bottom of the inner pot 2. In the centre of the ring-shaped mount 30, a hole is formed in which an identification element 33 is disposed. This identification element consists, for example, of an RFID embedded in a piece of plastic. Thus, the assembly 1 can easily be identified through the RFID by means of a reading device which is not discussed here in any more detail. The mount 30 may also be provided with other identification elements. A diagrammatically indicated barcode or dot code 32 is illustrated by way of example. Such a two-dimensional visual marking may also be provided in several locations on the mount ring 30.

For illustration purposes, the following examples of dimensions may be mentioned. The diameter of the mount ring 30 may be 65 mm, the diameter of the bottom edge 38 of the inner pot 2 may be approximately 75-80 mm and the distance X between the outer side 8 of the inner pot 2 and the inner side of the wall 7 of the outer pot 6 will, according to the invention, preferably be at least 5, more preferably approximately 10 mm or more.

As is indicated in Figure 4 by means of upwardly pointing arrows, a vertical air flow can enter the outer pot 6 via the intermediate spaces 35 and flow upwards via the space between the wall 8 of the inner pot 2 and the wall 7 of the outer pot 6 in order to leave the outer pot 6 at the top side. It will be clear that this air flow can also be reversed.

As can furthermore be seen in Figure 5, the bottom edge 20 of the wall 7 of the outer pot 6 is in the form of a hexagon. At a height of approximately 80 mm above the bottom 9 of the outer pot 6, the outer pot 6 indicated in the drawings has an equilateral hexagonal cross-sectional shape, with each side of the hexagonal shape thus being of equal length. This makes it easy for the outer pot 6 to be taken up by a conventional gripper for cylindrical pots.

In Figure 4, reference numeral 3 furthermore denotes the substrate and reference numeral 4 denotes a plant whose leaves 29 bear against the inner side of the wall 7 of the outer pot 6.

Figure 6 shows a plurality 40 of assemblies 1 according to the invention. It can be seen that a central outer pot 6a is in each case surrounded by six surrounding outer pots 6b. Adjoining each side 11-16 of the top edge 10 of the central outer pot 6a is an equally long side of the top edge of one of the surrounding outer pots 6b. It will be clear that the vertical gas stream indicated by arrows in Figure 7 is forced to pass through the outer pots 6 in its entirety and cannot pass on the outside.

Finally, Figure 7 shows a support frame 41, such as a container tray with a bearing surface 42 which is permeable to gas.

It will be clear to those skilled in the art that many variants are conceivable which have not been mentioned but fall within the scope of the invention.

## Claims

1. Assembly (1) for growing a plant (4),
comprising on the one hand an inner pot (2) for holding a substrate (3) with a plant (4) growing in the substrate (3) and on the other hand an outer pot (6);
in which the inner pot (2) can be accommodated in the outer pot (6); and
in which, when the inner pot (2) is accommodated in the outer pot (6), the wall (7) of the outer pot (6) protrudes above the wall (8) of the inner pot (2) in the vertical direction in order to support said plant (4);
in which a substrate (3) is provided in the inner pot (2) which contains a plant (4), **characterized in that**,
viewed in the horizontal plane, the top edge (10) of the wall (7) of the outer pot (6) has a hexagonal shape having six sides (11-16) extending between adjacent corners (21-26), the opposite sides (11, 14 and 12, 15 and 13, 16) of the hexagonal top edge (10) in each case running parallel to one another, and
**in that** the plant (4) is of the type in which the leaves (29) grow in substantially opposite directions, as is the case with a plant (4) of the phalaenopsis species, and in which the plant (4) is oriented in the outer pot (6) in such a manner that these leaves (29) point to opposite corners of the top edge (10) of the outer pot (6).

2. Assembly according to claim 1, in which the plant is of the phalaenopsis species.

3. Assembly according to claim 1 or 2, in which, in order to allow a vertical gas stream to pass through, on the one hand the bottom (9) of the outer pot (6) is at least partially open and on the other hand a passage which runs clear in the vertical direction is present between the wall (8) of the inner pot (2) and the wall (7) of the outer pot (6), and extends from the bottom (9) of the outer pot (6) up to the top edge (37) of the inner pot (2).

4. Assembly (1) according to one of the preceding claims, in which each angle (α) between adjacent sides (11, 12 and 12, 13 and 13, 14 and 14, 15 and 15, 16 and 16, 11) of the top edge (10) of the outer pot (6) is at least 100°, preferably approximately 120°.

5. Assembly (1) according to one of the preceding claims, in which the hexagonal shape has a first set of two opposite sides (12, 15) with mutually equal length (B), with the other four sides (11, 13, 14, 16) in each case having the same length (C), and with the length (B) of the sides (12, 15) of the first set of two opposite sides being unequal to the length (C) of the other four sides (11, 13, 14, 16).

6. Assembly (1) according to claim 5, in which the length (B) of the sides (12, 15) of the first set of two opposite sides is greater than the length (C) of the other four sides (11, 13, 14, 16).

7. Assembly (1) according to one of claims 1-4 or 6, in which the wall (7) of the outer pot (6), at a distance from the top edge, has a cross-sectional shape which is equilaterally polygonal or round.

8. Assembly (1) according to claim 7, in which said cross section has a hexagonal shape.

9. Assembly (1) according to one of the preceding claims, in which the wall (7) of the outer pot (6) comprises six substantially flat wall segments (51-56), and in which the sides (11-16) of the hexagonal top edge (10) in each case form a top side of said flat wall segment (51-56).

10. Assembly (1) according to one of the preceding claims, in which the horizontal cross-sectional surface of the outer pot (6) increases, viewed in the vertical upward direction.

11. Assembly (1) according to one of the preceding claims, in which the outer pot (6) and inner pot (2) each comprise a bottom (9, 19), and in which the bottom (9) of the outer pot (6) is situated below the bottom (19) of the inner pot (2) when the inner pot (2) is accommodated in the outer pot (6).

12. Assembly according to one of the preceding claims 1-10, in which the outer pot is a collar which is fitted to the wall (8) of the inner pot (2), for example to the top edge (37) of the wall (8) of the inner pot (2).

13. Assembly (1) according to one of the preceding claims, in which the plant (4) is of a species which grows the leaves at a mutual angle of 120° to 180°, such as the phalaenopsis species.

14. Assembly (1) according to one of the preceding claims, in which the outer pot comprises a substantially open bottom (9), in which the bottom (9) of the outer pot (6) is composed of supporting arms (31) and a mount (30) supported by said supporting arms (31), in which the supporting arms (31) extend from the mount (30) to the bottom edge of the wall (7) of the outer pot (6), and in which there is in each case an open space (35) between adjacent supporting arms (31).

15. Assembly (1) according to claim 14, in which the supporting arms (31) extend up to the wall (7) of the outer pot (6) and in which the supporting arms (31) are attached to the wall (7) of the outer pot (6).

16. Assembly according to claim 14 or 15, in which the mount (30) is annular and/or in which the mount (30) is intended for supporting an identification element (32, 33) and is provided in the centre of the bottom (9) of the outer pot (6).

17. Assembly according to one of the preceding claims, in which, when the inner pot (2) is accommodated in the outer pot (6) and, viewed in the vertical direction, the top edge (10) of the outer pot (6) is at least 50 mm, preferably at least 80 mm, such as 100 mm or more, higher than the top edge (37) of the inner pot (2).

18. Assembly according to claim 9 in combination with at least claim 5, in which the wall segments (51, 53, 54, 56) associated with said other four sides (11, 13, 14, 16), which in each case have a mutually equal length (C), are provided with ribs (36) on the inner side.

19. Assembly according to the preceding claim, in which the wall segments (52, 55) associated with said first set of two opposite sides (12, 15), which have a mutually equal length (B), are provided with ribs on the inner side.

20. Plurality (40) of adjacent assemblies (1) according to one of the preceding claims, in which a central outer pot (6a) is in each case surrounded by six surrounding outer pots (6b), and in which each side (11-16) of the top edge (10) of the central outer pot (6a) in each case bears against a side (11-16) of the top edge (10) of one of these six surrounding outer pots (6b).

21. Plurality (40) according to claim 20, in which the plurality is placed on a gas-permeable bearing surface (42) of a support frame (41).

22. Method for growing a plant (4) using an assembly according to one of claims 1-19 or a plurality according to one of claims 20-21, in which the plant is of a type in which the leaves grow in substantially opposite directions, as is the case with a phalaenopsis plant (4), and in which the plant (4) is oriented in the outer pot (6) in such a manner that these leaves point to opposite corners of the top edge (10).

23. Method according to claim 22, in which said opposite corners to which the leaves point are further apart than the other corners.

## Patentansprüche

1. Anordnung (1) zum Züchten einer Pflanze (4),
enthaltend einerseits einen Innentopf (2) zum Halten eines Substrates (3) mit einer Pflanze (4), die in dem Substrat (3) wächst, und andererseits einen Außentopf (6);
wobei der Innentopf (2) in dem Außentopf (6) aufgenommen werden kann und, wenn der Innentopf (2) in dem Außentopf (6) aufgenommen ist, die Wand (7) des Außentopfes (6) über die Wand (8) des Innentopfes (2) in der vertikalen Richtung hervorragt, um die Pflanze (4) zu stützen;
wobei ein Substrat (3) in dem Innentopf (2) vorgesehen ist, der eine Pflanze (4) enthält;
**dadurch gekennzeichnet, dass**,
in der horizontalen Ebene gesehen, der obere Rand (10) der Wand (7) des Außentopfes (6) eine sechseckige Form hat, die über sechs Seiten (11-16) verfügt, die sich zwischen benachbarten Ecken (21-26) erstrecken, wobei die gegenüberliegenden Seiten (11, 14 und 12, 15 sowie 13, 16) des sechseckigen oberen Randes (10) in jedem Fall parallel zueinander verlaufen und
die Pflanze (4) von einem Typ ist, bei dem die Blätter (29) in im wesentlichen entgegengesetzten Richtungen wachsen, wie es bei einer Pflanze (4) der Gattung der Phalaenopsis der Fall ist, und bei der die Pflanze (4) in dem Außentopf (6) derart ausgerichtet ist, dass die Blätter (29) zu gegenüberliegenden Ecken des oberen Randes (10) des Außentopfes (6) weisen.

2. Anordnung nach Anspruch 1, bei der die Pflanze von der Gattung der Phalaenopsis ist.

3. Anordnung nach Anspruch 1 oder 2, bei der, um den Durchgang eines vertikalen Gasstroms zuzulassen, einerseits der Boden (9) des Außentopfes teilweise geöffnet ist und andererseits ein Durchgang, der in der vertikalen Richtung frei ist, zwischen der Wand (8) des Innentopfes (2) und der Wand (7) des Außentopfes (6) vorhanden ist und sich vom Boden (9) des Außentopfes (6) bis zum oberen Rand (37) des Innentopfes (2) erstreckt.

4. Anordnung (1) nach einem der vorhergehenden Ansprüche, bei der jeder Winkel (α) zwischen benachbarten Seiten (11, 12 und 12, 13 und 13, 14 und 14, 15 und 15, 16 und 16, 11) des oberen Randes (10) des Außentopfes (6) wenigstens 100°, vorzugsweise etwa 120° beträgt.

5. Anordnung (1) nach einem der vorhergehenden Ansprüche, bei der die Sechseckform einen ersten Satz gegenüberliegender Seiten (12, 15) mit wechselseitig gleicher Länge (B) hat, wobei die äußeren vier Seiten (11, 13, 14, 16) in jedem Fall dieselbe Länge (C) haben und die Länge (B) der Seiten (12, 15) des ersten Satzes zweier gegenüberliegender Seiten ungleich der Länge (C) der anderen vier Seiten (11, 13, 14, 16) ist.

6. Anordnung (1) nach Anspruch 5, bei der die Länge (B) der Seiten (12, 15) des ersten Satzes zweier gegenüberliegender Seiten größer als die Länge (C) der anderen vier Seiten (11, 13, 14, 16) ist.

7. Anordnung (1) nach einem der Ansprüche 1 bis 4 oder 6, bei der die Wand (7) des Außentopfes (6) in einem Abstand von dem oberen Rand eine Querschnittsform hat, die gleichseitig polygonal oder rund ist.

8. Anordnung (1) nach Anspruch 7, bei der der Querschnitt eine sechseckige Form hat.

9. Anordnung (1) nach einem der vorhergehenden Ansprüche, bei der die Wand (7) des Außentopfes (6) sechs, im wesentlichen flache, Wandsegmente (51-56) enthält und bei der die Seiten (11-16) des sechseckigen oberen Randes (10) in jedem Fall eine Oberseite des flachen Wandsegmentes (51-56) bilden.

10. Anordnung (1) nach einem der vorhergehenden Ansprüche, bei der die horizontale Querschnittsfläche des Außentopfes (6), in vertikal aufwärtiger Richtung betrachtet, zunimmt.

11. Anordnung (1) nach einem der vorhergehenden Ansprüche, bei der der Außentopf (6) und der Innentopf (2) jeweils einen Boden (9, 19) enthalten und sich der Boden (9) des Außentopfes (6) unter dem Boden (19) des Innentopfes (2) befindet, wenn der Innentopf (2) in dem Außentopf (6) aufgenommen ist.

12. Anordnung nach einem der vorhergehenden Ansprüche 1 bis 10, bei der der Außentopf ein Kranz ist, der an die Wand (8) des Innentopfes (2), wie etwa den oberen Rand (37) der Wand (8) des Innentopfes (2), angepasst ist.

13. Anordnung (1) nach einem der vorhergehenden Ansprüche, bei der die Pflanze (4) von einer Gattung, bei der die Blätter in einem wechselseitigen Winkel von 120° bis 180° wachsen, wie etwa der Gattung der Phalaenopsis ist.

14. Anordnung (1) nach einem der vorhergehenden Ansprüche, bei der der Außentopf einen im wesentlichen offenen Boden (9) enthält, wobei der Boden (9) des Außentopfes (6) aus Haltearmen (31) und einer Halterung (30) besteht, die von den Haltearmen (31) gehalten ist, und sich die Haltearme (31) von der Halterung (30) zu dem Bodenrand der Wand (7) des Außentopfes (6) erstrecken und es in jedem Fall einen offenen Zwischenraum (35) zwischen benachbarten Haltearmen (31) gibt.

15. Anordnung (1) nach Anspruch 14, bei der sich die Haltearme (31) bis zu der Wand (7) des Außentopfes (6) erstrecken und die Haltearme (31) an der Wand (7) des Außentopfes (6) angebracht sind.

16. Anordnung nach Anspruch 14 oder 15, bei der die Halterung (30) ringförmig ist und/oder die Halterung (30) dazu bestimmt ist, ein Kennzeichnungselement (32, 33) zu halten und im Zentrum des Bodens (9) des Außentopfes (6) vorgesehen ist.

17. Anordnung nach einem der vorhergehenden Ansprüche, bei der, wenn der Innentopf (2) in dem Außentopf (6) aufgenommen ist, in vertikaler Richtung betrachtet, der obere Rand (10) des Außentopfes (6) wenigstens 50 mm, vorzugsweise wenigstens 80 mm, wie etwa wenigstens 100 mm, höher als der obere Rand (37) des Innentopfes (2) ist.

18. Anordnung nach Anspruch 9, bei der in Kombination wenigstens mit Anspruch 5 die Wandsegmente (51, 53, 54, 56), die den anderen vier Seiten (11, 13, 14, 16) zugeordnet sind, die in jedem Fall eine wechselseitig gleiche Länge (C) haben, mit Stegen (36) auf der Innenseite versehen sind.

19. Anordnung gemäß dem vorhergehenden Anspruch, bei der die Wandsegmente (52, 55), die dem ersten Satz zweier gegenüberliegender Seiten (12, 15) zugeordnet sind, die eine wechselseitig gleiche Länge (B) haben, mit Stegen auf der Innenseite versehen sind.

20. Vielzahl (40) aneinander grenzender Anordnungen (1) nach einem der vorhergehenden Ansprüche, bei denen ein zentraler Außentopf (6a) in jedem Fall von sechs umgebenden Außentöpfen (6b) umgeben ist und bei denen jede Seite (11-16) des oberen Randes (10) des zentralen Außentopfes (6a) in jedem Fall an einer Seite (11-16) des oberen Randes (10) eines dieser sechs umgebenden Außentöpfe (6b) anliegt.

21. Vielzahl (40) nach Anspruch 20, wobei die Vielzahl auf einer gasdurchlässigen Lagerfläche (42) eines Halterahmens (41) angeordnet ist.

22. Verfahren zum Züchten einer Pflanze (4) unter Verwendung einer Anordnung nach einem der Ansprüche 1 bis 19 oder einer Vielzahl nach einem der Ansprüche 20 bis 21, wobei die Pflanze von einem Typ ist, bei dem die Blätter in im wesentlichen entgegengesetzten Richtung wachsen, wie es bei einer Phalaenopsis (4) der Fall ist, und bei dem die Pflanze (4) in dem Außentopf (6) derart ausgerichtet ist, dass diese Blätter in gegenüberliegende Ecken des oberen Randes (10) zeigen.

23. Verfahren nach Anspruch 22, bei dem die gegenüberliegenden Seiten, auf die die Blätter zeigen, voneinander weiter entfernt sind als die anderen Ecken.

## Revendications

1. Ensemble (1) pour cultiver une plante (4), comprenant d'une part, un pot interne (2) pour contenir un substrat (3) avec une plante (4) qui pousse dans le substrat (3) et d'autre part, un pot externe (6) ;
dans lequel le pot interne (2) peut être logé dans le pot externe (6) ; et
dans lequel, lorsque le pot interne (2) est logé dans le pot externe (6), la paroi (7) du pot externe (6) fait saillie au-dessus de la paroi (8) du pot interne (2) dans la direction verticale afin de supporter ladite plante (4) ;
dans lequel on prévoit un substrat (3) dans le pot interne (2) qui contient une plante (4),
**caractérisé en ce que**, observé dans le plan horizontal, le bord supérieur (10) de la paroi (7) du pot externe (6) a une forme hexagonale ayant six côtés (11-16) s'étendant entre des coins (21-26) adjacents, les côtés opposés (11, 14 et 12, 15 et 13, 16) du bord supérieur hexagonal (10), dans chaque cas, s'étendant parallèlement les uns aux autres, et
**en ce que** la plante (4) est du type dans lequel les feuilles (29) poussent dans des directions sensiblement opposées, comme cela est le cas avec une plante (4) de l'espèce des phalaenopsis, et dans lequel la plante (4) est orientée dans le pot externe (6) de sorte que ces feuilles (29) sont dirigées vers les coins opposés du bord supérieur (10) du pot externe (6).

2. Ensemble selon la revendication 1, dans lequel la plante est de l'espèce des phalaenopsis.

3. Ensemble selon la revendication 1 ou 2, dans lequel, afin de permettre à un flux de gaz vertical de passer à travers ce dernier, d'une part, le fond (9) du pot externe (6) est au moins partiellement ouvert et d'autre part, un passage qui s'étend dans la direction verticale, est présent entre la paroi (8) du pot interne (2) et la paroi (7) du pot externe (6) et s'étend à partir du fond (9) du pot externe (6) jusqu'au bord supérieur (37) du pot interne (2).

4. Ensemble (1) selon l'une quelconque des revendications précédentes, dans lequel chaque angle (α) entre les côtés adjacents (11, 12 et 12, 13 et 13, 14 et 14, 15 et 15, 16 et 16, 11) du bord supérieur (10) du pot externe (6) est d'au moins 100°, de préférence d'approximativement 120°.

5. Ensemble (1) selon l'une quelconque des revendications précédentes, dans lequel la forme hexagonale a un premier ensemble de deux côtés opposés (12, 15) avec une longueur mutuellement égale (B), avec les quatre autres côtés (11, 13, 14, 16) dans chaque cas, qui ont la même longueur (C) et avec la longueur (B) des côtés (12, 15) du premier ensemble de deux côtés opposés qui n'est pas égale à la longueur (C) des quatre autres côtés (11, 13, 14, 16).

6. Ensemble (1) selon la revendication 5, dans lequel la longueur (B) des côtés (12, 15) du premier ensemble de deux côtés opposés est supérieure à la longueur (C) des quatre autres côtés (11, 13, 14, 16).

7. Ensemble (1) selon l'une quelconque des revendications 1 à 4 ou 6, dans lequel la paroi (7) du pot externe (6), à une certaine distance du bord supérieur, a une forme transversale qui est équilatéralement polygonale ou ronde.

8. Ensemble (1) selon la revendication 7, dans lequel ladite section transversale a une forme hexagonale.

9. Ensemble (1) selon l'une quelconque des revendications précédentes, dans lequel la paroi (7) du pot externe (6) comprend six segments de paroi (51-56) sensiblement plats et dans lequel les côtés (11-16) du bord supérieur hexagonal (10) dans chaque cas forment un côté supérieur dudit segment de paroi plat (51-56).

10. Ensemble (1) selon l'une quelconque des revendications précédentes, dans lequel la surface transversale horizontale du pot externe (6) augmente, observée dans la direction ascendante verticale.

11. Ensemble (1) selon l'une quelconque des revendications précédentes, dans lequel le pot externe (6) et le pot interne (2) comprennent chacun un fond (9, 19), et dans lequel le fond (9) du pot externe (6) est situé sous le fond (19) du pot interne (2) lorsque le pot interne (2) est logé dans le pot externe (6).

12. Ensemble selon l'une quelconque des revendications 1 à 10, dans lequel le pot externe est un collier qui est monté sur la paroi (8) du pot interne (2), par exemple sur le bord supérieur (37) de la paroi (8) du pot interne (2).

13. Ensemble (1) selon l'une quelconque des revendications précédentes, dans lequel la plante (4) est d'une espèce qui fait pousser les feuilles à un angle mutuel de 120° à 180°, comme l'espèce des phalaenopsis.

14. Ensemble (1) selon l'une quelconque des revendications précédentes, dans lequel le pot externe comprend un fond (9) sensiblement ouvert, dans lequel le fond (9) du pot externe (6) est composé de bras de support (31) et d'un bâti (30) supporté par lesdits bras de support (31), dans lequel les bras de support (31) s'étendent à partir du bâti (30) jusqu'au bord inférieur de la paroi (7) du pot externe (6), et dans lequel il y a, dans chaque cas, un espace ouvert (35) entre les bras de support (31) adjacents.

15. Ensemble (1) selon la revendication 14, dans lequel les bras de support (31) s'étendent jusqu'à la paroi (7) du pot externe (6) et dans lequel les bras de support (31) sont fixés sur la paroi (7) du pot externe (6).

16. Ensemble selon la revendication 14 ou 15, dans lequel le bâti (30) est annulaire et/ou dans lequel le bâti (30) est prévu pour supporter un élément d'identification (32, 33) et est prévu dans le centre du fond (9) du pot externe (6).

17. Ensemble selon l'une quelconque des revendications précédentes, dans lequel, lorsque le pot interne (2) est logé dans le pot externe (6) et, observé dans la direction verticale, le bord supérieur (10) du pot externe (6) est au moins 50 mm, de préférence au moins 80 mm, tel que 100 mm ou plus, supérieur au bord supérieur (37) du pot interne (2).

18. Ensemble selon la revendication 9, en combinaison avec au moins la revendication 5, dans lequel les segments de paroi (51, 53, 54, 56) associés auxdits quatre autres côtés (11, 13, 14, 16), qui dans chaque cas, ont une longueur (C) mutuellement égale, sont dotés de nervures (36) sur le côté interne.

19. Ensemble selon la revendication précédente, dans lequel les segments de paroi (52, 55) associés audit premier ensemble de deux côtés opposés (12, 15), qui ont une longueur (B) mutuellement égale, sont dotés de nervures sur le côté interne.

20. Pluralité (40) d'ensembles (1) adjacents selon l'une quelconque des revendications précédentes, dans laquelle le pot externe central (6a) est, dans chaque cas, entouré par six pots externes périphériques (6b), et dans laquelle chaque côté (11-16) du bord supérieur (10) du pot externe central (6a), dans chaque cas, s'appuie contre un côté (11-16) du bord supérieur (10) de l'un de ces six pots externes périphériques (6b).

21. Pluralité (40) selon la revendication 20, dans laquelle la pluralité est placée sur une surface d'appui perméable au gaz (42) d'un châssis de support (41).

22. Procédé pour faire pousser une plante (4) à l'aide d'un ensemble selon l'une quelconque des revendications 1 à 19 ou une pluralité selon l'une quelconque des revendications 20 à 21, dans lequel la plante est d'un type dans lequel les feuilles poussent dans des directions sensiblement opposées, comme cela est le cas avec une plante de l'espèce de phalaenopsis (4), et dans lequel la plante (4) est orientée dans le pot externe (6) de sorte que ces feuilles sont dirigées vers les coins opposés du bord supérieur (10).

23. Procédé selon la revendication 22, dans lequel lesdits coins opposés vers lesquels les feuilles sont dirigées, sont en outre éloignés des autres coins.
